# EUROPEAN PATENT SPECIFICATION

(11) **EP 3 324 523 B1**
(45) Date of publication and mention of the grant of the patent: **05.06.2024**
(21) Application number: 16199941.2
(22) Date of filing: 22.11.2016
(51) Int. Cl.: H02K 24/00

(54) **VARIABLE RELUCTANCE TYPE ANGLE SENSOR WITH PARTIAL STATOR CORE**
VARIABLER RELUKTANZTYPWINKELSENSOR MIT TEILWEISEM STATORKERN
CAPTEUR D'ANGLE DE TYPE À RÉLUCTANCE VARIABLE AVEC UN NOYAU À STATOR PARTIEL

(43) Date of publication of application: 23.05.2018
(73) Proprietor: Tyco Electronics Belgium EC BVBA, 8020 Oostkamp (BE)
(72) Inventor: OCKET, Tom, 8820 Torhout (BE); BRAM, Embo, 8500 Kortrijk (BE)
(74) Representative: Grünecker Patent- und Rechtsanwälte PartG mbB

(56) References cited:
- EP-A1- 1 321 744
- JP-A- 2002 168 652
- JP-A- 2009 300 238

## Description

The present invention relates to a variable reluctance type angle sensor comprising a stator and a rotor, and to a method of fabricating a variable reluctance type angle sensor.

Reluctance resolvers have an at least partly soft magnetic stator and an at least partly soft magnetic rotor. Rotor and stator are opposed to each other and form an air gap between each other. The reluctance within the air gap changes periodically due to the particular form of the rotor which varies around its circumference.

The angle sensor has a magnetic flux sender arranged at the stator for generating via at least one pole pair a predetermined magnetic flux distribution within the air gap. Furthermore, on the same stator a magnetic flux detector is arranged, which detects the intensity of the magnetic field by means of at least two signal pole pairs being off-set to each other by a predetermined angle. From both detector signals, an angle value can be derived for the relative position of the rotor with respect to the stator.

These magneto electric angle sensors which are based on the principle of a varying magnetic flux intensity in an air gap between the stator and the rotor are known in various forms. Basically, several principles for generating the magnetic flux in the sender part and also different principles for measuring the magnetic field in the detector part are known. Resolvers and so called syncros use electromagnetic coils in the form of primary and secondary windings.

Such resolvers and syncros have the advantage to yield accurate results and to represent very robust angle sensors. In particular, so called reluctance resolvers are known, where the primary as well as the secondary windings are arranged at the stator, whereas the rotor has no windings and thus passively influences the magnetic flux circuit with specially designed magnetically soft parts. By means of an irregular form of the magnetically soft rotor, for instance by providing lobes, the magnetic flux between the primary windings and secondary windings on the stator are influenced differently, thus allowing to derive the angular position of the rotor from the induced voltage.

Resolvers are superior to many other kinds of absolute position sensors because of their ruggedness, and ability to provide a very high degree of angular accuracy under severe conditions. There are no optical paths to keep clear of smoke or oils that often disrupt the operation of optical encoders. Because they are a proportional device, they are also less subject to input signal anomalies; a voltage or frequency variance will change both the sine and cosine outputs equally.

EP 1 321 744 A1 relates to a rotary position detector comprising a rotor rotatable in synchronism with a motor and a rotary position detecting portion for generating a voltage signal corresponding to an angular position detectable as a magnetic flux change with rotation of the rotor, wherein the detecting portion is disposed with respect to the rotor within a range of an angle of 2 π /n, where n is the number of pairs of poles of the motor, and a motor provided with the same rotary position detector, wherein a motor drive control circuit is assembled together with the detecting portion at the same place on the motor. The rotary position detector is intended to be easy to manufacture, small and light, easy to mount on a motor and easy to connect with a motor drive control printed circuit.

JP 2009-300238 A discloses a variable reluctance type resolver which is intended to detect a rotation angle more accurately. The variable reluctance type resolver has a rotor, and a stator constituted rotatably relative to the rotor and arranged opposite to a part of the outer circumferential surface or the plane of rotation of the rotor, and a coil row wherein a plurality of excitation coils and a plurality of detection coils are aligned along the circumferential direction of the rotor is constituted on the stator. The plurality of excitation coils are arranged from one end to the other end of the coil row, and the plurality of detection coils are arranged on a part other than both ends of the coil row, and the number of turns of the excitation coils arranged on both ends of the coil row among the plurality of excitation coils is different from the number of turns of the excitation coils arranged on a part other than both ends of the coil row among the plurality of excitation coils.

JP 2002-168 652 A relates to an nX reluctance resolver. To provide an nX reluctance resolver more compact than conventional ones, the nX reluctance resolver is composed of an inductortype rotor and a stator, that rotate around a rotary shaft. The stator core comprises an arcuate yoke that is positioned within an angle range of 360 deg./n (n: 2 or larger integer) in terms of a mechanical angle, and 4×k (k: 1 or larger integer) magnetic pole sections that are connected to the yoke and are arranged at a specific interval. Each of the magnetic pole sections is wound with excitation windings. Every other magnetic pole section is wound with first winding for detection, and remaining every other magnetic pole section is wound with a second winding section for detection.

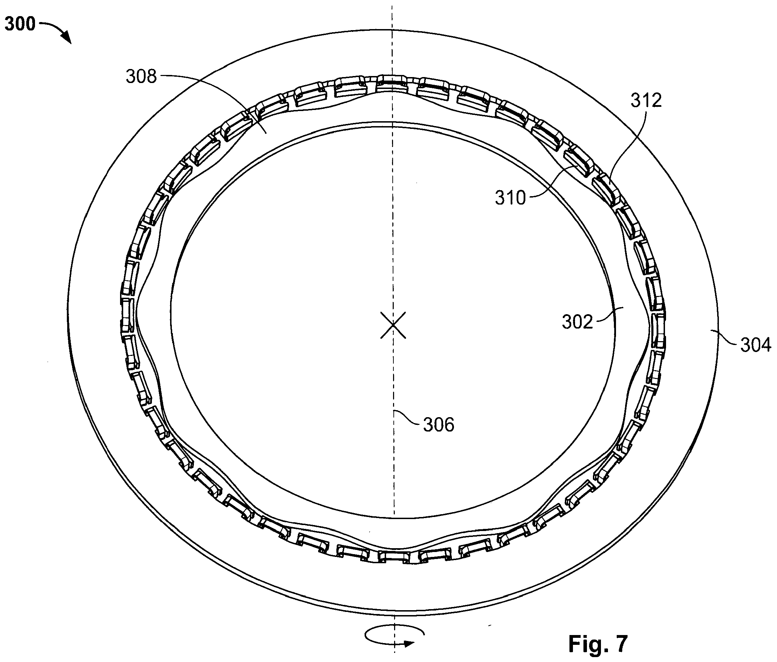

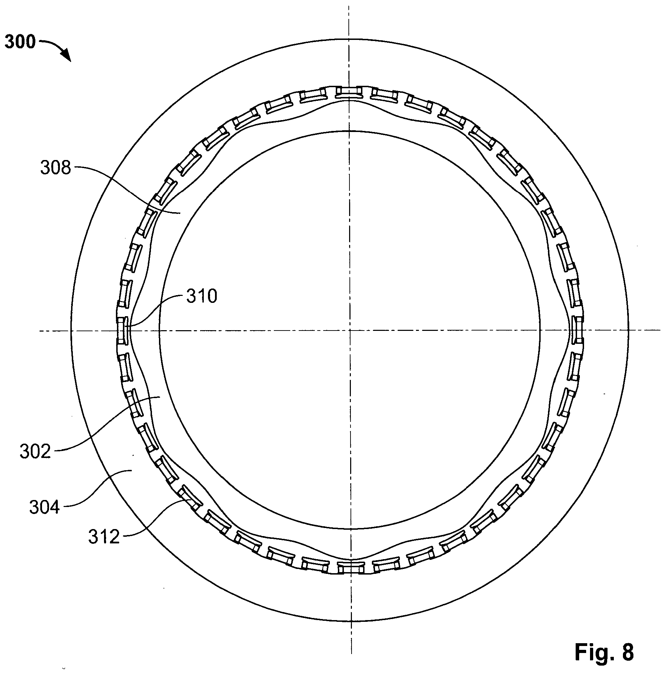

Figures 7 and 8 illustrate a conventional reluctance resolver 300. A soft magnetic rotor 302 is mounted within a ring shaped stator 304 so as to be rotatable about an axis of rotation 306. The rotor shown in this figure has 12 lobes 308 which cause during rotating about the axis 306 a variable air gap between the rotor 302 and the 40 teeth 310 (also called poles) of the stator 304. Each pole 310 carries one or more windings 312 forming an excitation winding (also referred to as primary winding) and a sine and a cosine winding (also called secondary windings). By means of the primary winding a magnetic flux is generated in the stator 304 which is influenced by the changing position of the rotating rotor 302. In the secondary windings a voltage is induced which is influenced by varying gap distance between the rotor 302 and the stator poles 310. The angular position of the rotor 302 can be derived from the induced voltage according to the well-known evaluation schemes.

However, with increasing diameters the costs for fabricating the stator and its weight are rising significantly.

Consequently, there is a need to provide an improved reluctance resolver that is economic and simpler to fabricate, but at the same time yields accurate measurement results and is robust and long-term stable also in challenging environments.

This object is solved by the subject matter of the independent claims. Advantageous embodiments of the present invention are the subject matter of the dependent claims.

The present invention is based on the idea that for a reluctance resolver functioning as a full circle resolver, it is not necessary to use a full circle stator-a stator that covers only a part of the full circle surprisingly is sufficient. The stator covering only a segment of the complete rotation path of the rotor interacts with a conventionally shaped turning rotor in a way that essentially the same information can be extracted as from an arrangement with a stator that covers a complete 360°.

According to the present invention, a variable reluctance type angle sensor comprises at least one stator with an at least partly ferromagnetic core having a yoke and a plurality of teeth (also referred to as poles) which extend from the yoke radially inward toward or outward from a central rotational axis of the angle sensor, wherein an excitation winding and at least one output winding are mounted on the poles. A rotor is operable to rotate around the central rotational axis with respect to the stator and has such a shape that a gap permeance varies in a sine wave manner with respect to an angle of rotation around the central rotational axis. According to the present invention, the yoke is shaped to extend along a circular arc around said central rotational axis to cover a yoke angle of less than 360°.

The advantages of this improvement are manifold. Firstly, the material costs can be reduced significantly. When stamping the lamellae for the full resolver stator and rotor package, the whole inside geometry has to be discarded. With the stator geometry according to the present invention, the individual blanks can be arranged much closer to each other in a stamping die, thus reducing the required amount of material. Moreover, the weight of the resolver can be reduced. This is particularly advantageous when fabricating resolvers with large diameters of e. g. 30 cm.

Further, for the fabrication of the stator core, the stamping die can have a shorter length. This reduces the cost of the die and also allows the use of standard stamping presses instead of expensive custom-made presses.

Wiring the windings is also more economic because fewer coils are needed, whereby the cycle time is reduced. Also all other components like the overmolding tools for the coils and covers become less expensive.

Finally, the angle sensor according to the present invention requires less installation space and can be used for applications with limited space where a full circle stator cannot be accommodated.

The stator has five or ten inner poles that are distributed around said central rotational axis to cover at least one electrical period of the rotor. This is the smallest possible configuration for the stator being able to function with a standard rotor as a full-fledged reluctance resolver.

The five or ten inner poles carry a primary winding and a sine and a cosine secondary windings.

When choosing the yoke angle to be about 90°, a particularly high accuracy can be ensured.

A multitude of different wiring schemes can be used for the windings provided at the segment-shaped stator according to the present invention. In order to reduce the effect of the magnetic flux deviating at the outside poles, a winding scheme is provided where the peripheral poles carry only a primary winding. Moreover, the number and/or the direction of the windings differs from pole to pole. In particular, the number of winding turns around peripheral poles of the stator may be lower than the number of winding turns around the inner poles.

Due to the eccentricity when using only one segment-shaped stator the signals suffer from a reduced angular accuracy. In order to overcome this effect at least partly, two partial resolver stators can be arranged opposite to each other. According to an advantageous embodiment, the angle sensor therefore comprises a first and a second stator which each cover a yoke angle of 45° or 90°, wherein said first stator is arranged symmetrically to the second stator with respect to said central rotational axis. For instance, the first and the second stator each have a yoke angle of about 90°, and wherein the second stator is arranged opposite to the first stator.

In order to achieve a high degree of symmetry and thus compensate for the eccentricity, the windings on the second stator may be distributed on the poles with point symmetry to the distribution of the windings on the first stator, wherein the origin of the point symmetry is the point where the rotational axis intersects the plane defined by the rotor. Alternatively, the windings on the second stator may be distributed on the poles with point symmetry to the distribution of the windings on the first stator, but with inverted winding direction.

The advantages of the present invention can best be exploited with the partial stator being fabricated from stamped and layered ferromagnetic lamellae.

The present invention further relates to a method of fabricating a variable reluctance type angle sensor, the method being defined by claim 7.

As already mentioned above, this method allows for a reduced cycle time for the assembly, and saves material and costs.

A particularly easy way of attaching the windings to the poles of the stator is to attach an electrically insulating coil body for each pole with at least one winding, and mounting the coil bodies on the poles.

In order to provide a uniform magnetic flux through those poles of the stator that carry the output windings, the stator may be fabricated in a way that the stator has a first and a second peripheral pole and a plurality of inner poles, wherein the number of turns of the windings on the first and second peripheral pole differs from the number of turns of the windings on the inner poles.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic perspective view of a reluctance resolver according to a first advantageous embodiment;
- **FIG. 2**: is a schematic plan view of the reluctance resolver shown in Fig. 1;
- **FIG. 3**: is a schematic illustration of a winding scheme that can be used with the reluctance resolver shown in Fig. 1 and 2;
- **FIG. 4**: is a schematic perspective view of a reluctance resolver according to a second advantageous embodiment;
- **FIG. 5**: is a schematic plan view of the reluctance resolver shown in Fig. 4;
- **FIG. 6**: is a schematic illustration of a winding scheme that can be used with the reluctance resolver shown in Fig. 4 and 5;
- **FIG. 7**: is a schematic perspective view of a conventional reluctance resolver;
- **FIG. 8**: is a schematic plan view of the conventional reluctance resolver shown in Fig. 7.

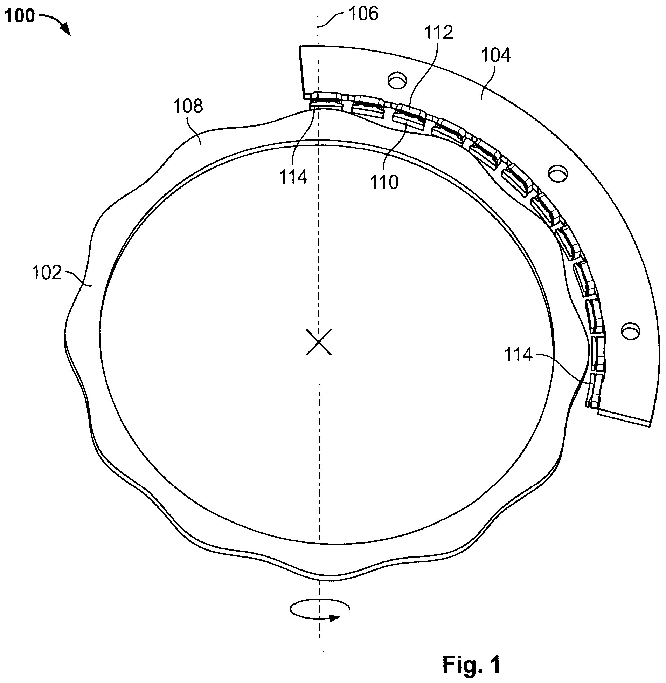

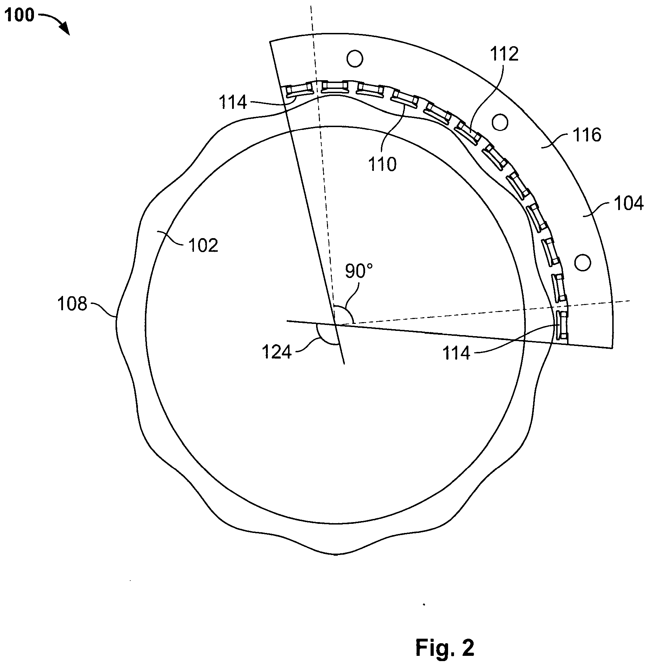

The present invention will now be explained in more detail with reference to the Figures. When first turning to Fig. 1, a perspective view of a reluctance resolver 100 according to a first embodiment of the present invention is shown. Fig. 2 shows the belonging plan view of the reluctance resolver 100.

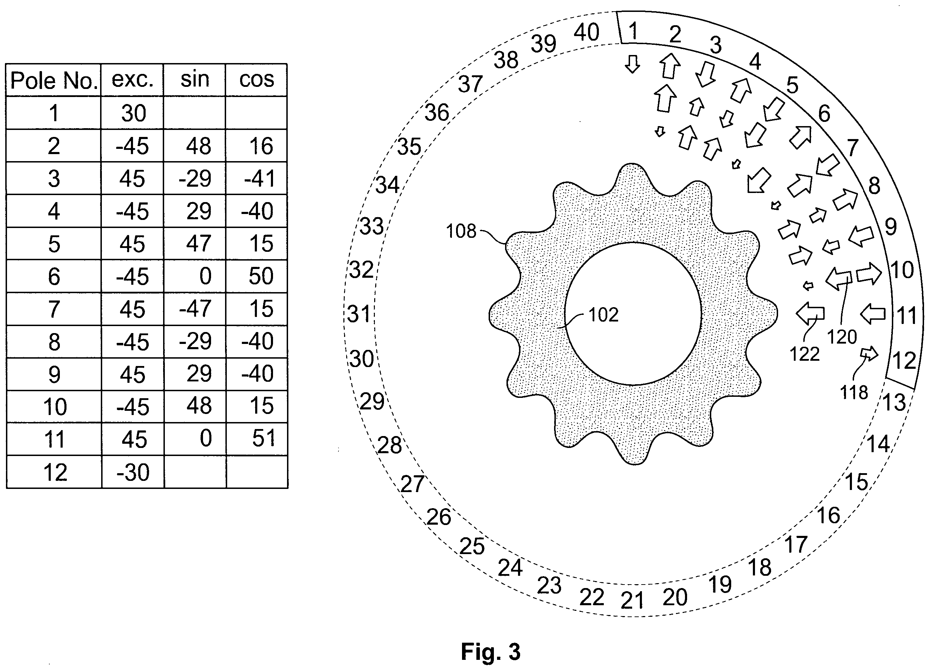

A soft magnetic rotor 102 is mounted within a stator 104 so as to be rotatable about an axis of rotation 106. The rotor in the embodiment shown in this figure has 12 lobes 108 which cause during rotating about the axis 106 a variable air gap between the poles (or teeth) 110 of the stator 104 and the rotor 102. As will be explained in more detail with reference to Fig. 3, each pole 110 carries one or more windings 112 forming an excitation winding (also referred to as primary winding) and a sine and/or a cosine winding (also called secondary winding).

By means of the primary winding a magnetic flux is generated in the stator 104 which is influenced by the changing position of the rotating rotor 102. In the secondary windings a voltage is induced which is influenced by varying gap distance between the rotor 102 and the stator poles 110. The angular position of the rotor 102 can be derived from the induced voltage according to the well-known evaluation schemes.

In contrast to the conventional arrangement shown in Fig. 7 and 8, however, the stator 104 does not extend around the complete circumference of the rotor 102, but has a yoke angle 124 which is 90°.

The inventors of the present invention found that surprisingly a stator that covers a much smaller segment of the circumference than the full circle, e. g. approximately 90°, is sufficient for exciting and picking up a signal that has a satisfactory angular accuracy.

As shown in Fig. 1 and 2, the segment-shaped stator 104 comprises 12 poles which are extending inwardly towards the rotational axis 106 from a yoke 116. It should be noted that the idea according to the present invention may of course also be applied to a resolver with an outer rotor, where poles of the stator extend outwardly from the rotational axis, although the Figures only show embodiments with an inner rotor.

As will become apparent in more detail from Figure 3, this number of poles 110 is equivalent to ¼ of the number of poles 310 of the full-circle stator 300 (corresponding to 90° being a quarter of the full circle) plus one additional peripheral pole 114 at each side of the stator 104.

It is clear for a person skilled in the art that any other fraction of a full circle may also be used, as long as four poles are provided which are distributed over at least one electrical period of the rotor. When for instance using a stator that covers 45°, five poles plus two peripheral poles, i. e. seven poles, may be provided for interacting with the rotor shown in all the Figures having 12 lobes.

It could be shown that the reluctance resolver 100 with a segment-shaped stator 104 can be operated in the same manner as the conventional full circle resolver 300 shown in Figures 7 and 8.

An example of an advantageous winding scheme will now be explained with reference to the schematic drawing of Fig. 3. As schematically depicted, a rotor 102 with 12 lobes 108 is rotatable within a stator that has twelve poles (indicated by the numbers "1" to "12").The remaining numbers "13" to "40" symbolize how the equivalent full circle stator would look like. The arrows 118, 120, 122 symbolize the magnetic fluxes occurring at the poles of the stator. In particular, arrows 118 of the outer row show the excitation flux, arrows 120 of the middle row relate to the flux through the sine windings, and arrows 122 of the inner row illustrate the flux through the cosine windings.

The table at the side of Figure 3 shows an example of the corresponding number of turns for each winding, where the winding direction is given by the positive or negative sign.

According to the present invention, the peripheral poles (i. e. poles No. 1 and 12) carry only a primary winding, but no secondary winding. These additional excitation windings serve the purpose to compensate for a deviation of the magnetic flux at the extreme ends of the segment-shaped stator core. Preferably, the number of turns at these peripheral excitation windings is lower than the number of turns for the remaining poles. For instance, the peripheral poles may carry windings with 30 turns, while all other poles have excitation windings with 45 turns, i. e. 50 % more than the peripheral poles. The number of windings at the peripheral poles has to be optimized until the magnetic flux for the first "real" resolver pole (in Fig. 3 these are poles No. 2 and 11) is as close as possible to the situation for the conventional full circle resolver shown in Fig. 7 and 8.

This compensation can also be achieved by increasing the number of turns on poles No. 2 and No. 11, but in this case the magnetic flux through the adjacent poles No. 3 and No. 10 would become higher. Hence, the number of turns has to be adapted also for these adjacent poles, and so forth.

A further possibility of compensating the flux deviation is to correct the number of turns for the secondary windings. However, it could be shown that the best results are obtained by adding the peripheral poles 114, carrying only an excitation winding with a lower number of turns than the rest of the poles.

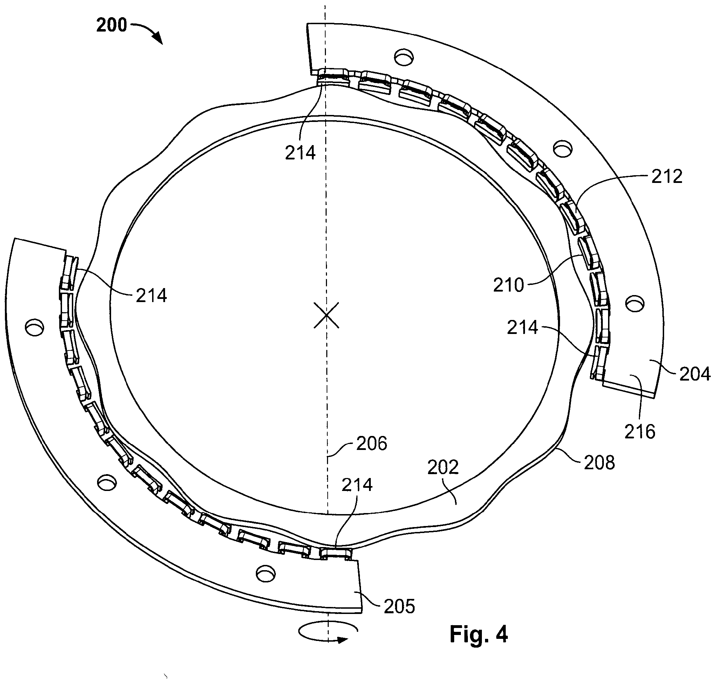

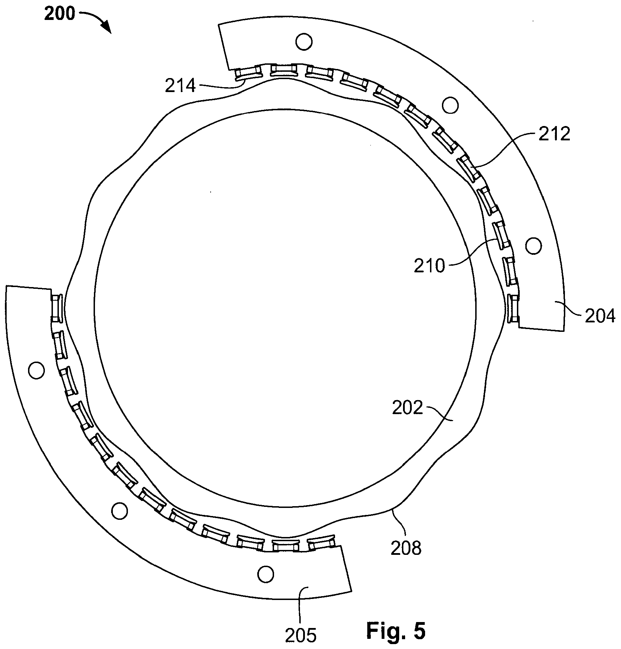

The embodiment of the present invention as explained with reference to Figures 1 to 3 has the disadvantage that it has an inherent eccentricity that may lead to signal disturbances. In particular, angular errors may occur due to the eccentric geometry. In order to overcome (or at least mitigate) these problem, a reluctance resolver 200 according to a second advantageous embodiment comprises not only one first segment-shaped stator 204, but comprises additionally a second segment-shaped stator 205. This arrangement is depicted in Figures 4 and 5.

According to this embodiment, the first stator 204 is identical to the first stator 104 of the first embodiment shown in figures 1 to 3. The second segment-shaped stator 205 is arranged opposite to the first stator 204 in a centrally symmetric way, wherein the point where the rotational axis 206 intersects the plane of the resolver 200 represents the symmetry center. According to the embodiment shown in Figures 4 and 5, each of the stators 204, 205 has 12 poles in total, wherein the peripheral poles 214 carry only excitation windings and serve to compensate the flux deviation in the peripheral regions of the stators.

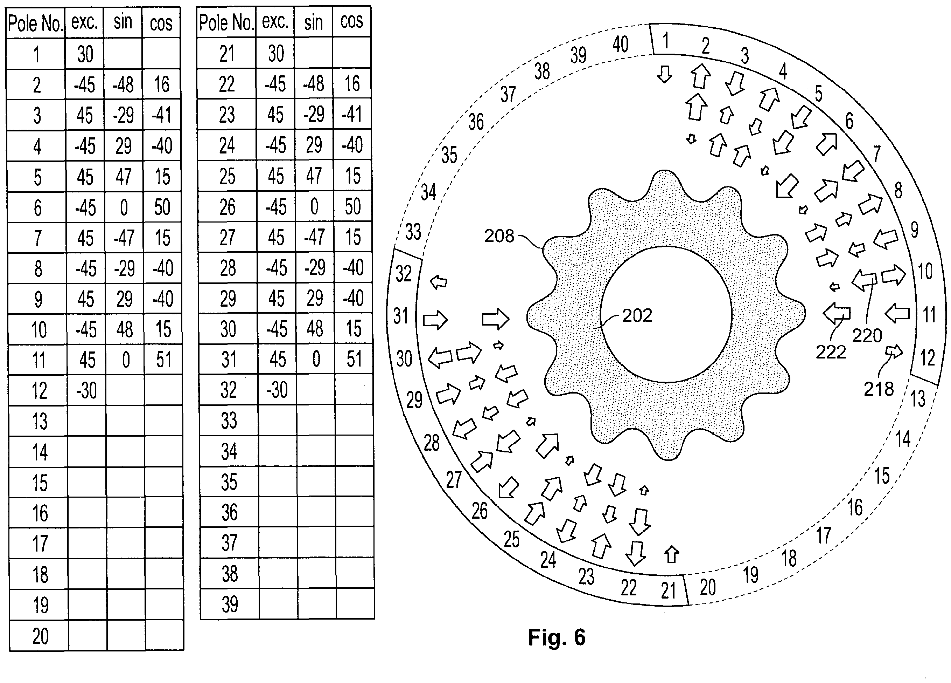

Fig. 6 shows the winding scheme for the reluctance resolver 200 of Fig. 4 and 5. As can be seen from this Figure, the windings on the second stator 205 are distributed in a point symmetric manner. In other words, pole No. 21 corresponds to pole No. 1, pole No. 22 corresponds to pole No. 2, and so forth.

Moreover, the number of turns for the windings at the peripheral poles 214 is lower than the number of turns for the remaining poles 210.

Alternatively, the winding scheme could also be chosen so that the numbers of turns on the second stator 205 are as shown in Fig. 6, only with the opposite sign, i. e. with the opposite winding direction. In other words, point symmetry is given for the absolute number, but the sign is opposite.

### REFERENCE NUMERALS

| | |
|---|---|
| **Reference Numeral** | **Description** |
| 100, 200 | Reluctance resolver |
| 102, 202 | Rotor |
| 104, 204, 205 | Stator |
| 106, 206 | Rotational axis |
| 108, 208 | Lobe of rotor |
| 110, 210 | Pole |
| 112, 212 | Windings |
| 114, 214 | Peripheral pole |
| 116, 216 | Yoke |
| 118 | Excitation winding |
| 120 | Sine winding |
| 122 | Cosine winding |
| 124 | Yoke angle |
| 300 | Conventional resolver |
| 302 | Rotor |
| 304 | Stator |
| 306 | Rotational axis |
| 308 | Love of rotor |
| 310 | Pole |
| 312 | Winding |

## Claims

1. A variable reluctance type angle sensor comprising:
at least one stator (104; 204) with an at least partly ferromagnetic core having a yoke (116; 216) and a plurality of inner poles (110; 210) which extend from the yoke (116; 216) radially inward toward or outward from a central rotational axis (106; 206) of the angle sensor, wherein an excitation winding and at least one output winding are mounted on the inner poles (110; 210),
a rotor (102; 202) which is operable to rotate around the central rotational axis (106; 206) with respect to the stator (104; 204) and has such a shape that a gap permeance varies in a sine wave manner with respect to an angle of rotation around the central rotational axis (106; 206), wherein the yoke (116; 216) is shaped to extend along a circular arc around said central rotational axis (106; 206) to cover a yoke angle (124) of less than 360°,
wherein the number and/or the direction of the windings differ from pole to pole, and
wherein additional first and second peripheral poles (114; 214) are provided which carry only a primary winding,
**characterized in that**
a) said stator (104; 204) has five inner poles (110; 210) that are distributed around said central rotational axis (106; 206) to cover 45° of the rotor (102; 202) having 12 lobes, wherein said inner poles (110; 210) each carry a primary winding and a sine and/or a cosine secondary winding, or
b) said stator (104; 204) has 10 inner poles (110; 210) that are distributed around said central rotational axis (106; 206) to cover 90° of the rotor (102; 202) having 12 lobes, wherein said inner poles (110; 210) each carry a primary winding and a sine and/or a cosine secondary winding.

2. Angle sensor according to claim 1, wherein the number of winding turns around peripheral poles (114; 214) of the stator (104; 204) is lower than the number of winding turns around the inner poles.

3. Angle sensor according to one of the preceding claims, comprising a first and a second stator (204, 205) which each cover a yoke angle of less than 180°, wherein said first stator (204) is arranged symmetrically to said second stator (205) with respect to said central rotational axis (206).

4. Angle sensor according to claim 3, wherein the windings on the second stator (205) are distributed on the poles with point symmetry to the distribution of the windings on the first stator (204), wherein the origin of the point symmetry is the point where the rotational axis (206) intersects the plane defined by the rotor (202).

5. Angle sensor according to claim 3, wherein the windings on the second stator (205) are distributed on the poles with point symmetry to the distribution of the windings on the first stator (204), but with inverted winding direction, wherein the origin of the point symmetry is the point where the rotational axis (206) intersects the plane defined by the rotor (202).

6. Angle sensor according to one of the preceding claims, wherein said stator (104; 204, 205) is fabricated from stamped and layered ferromagnetic lamellae.

7. Method of fabricating a variable reluctance type angle sensor, the method comprising the following steps:
fabricating a rotor (102; 202) operable to rotate around a central rotational axis (106; 206) of the angle sensor (110; 200), the rotor (102; 202) having 12 lobes with such a shape that a gap permeance varies in a sine wave manner with respect to an angle of rotation around the central rotational axis (106; 206);
fabricating at least one stator (104; 204, 205) with an at least partly ferromagnetic core having a yoke (116; 216) and a plurality of inner poles (110; 210) which extend from the yoke (116; 216) radially inward toward or outward from the central rotational axis (106; 206), wherein the yoke (116; 216) is shaped to extend along a circular arc around said central rotational axis to cover a yoke angle (124) of less than 360°, and wherein
a) said stator (104; 204) has five inner poles (110; 210) that are distributed around said central rotational axis (106; 206) to cover 45° of the rotor (102; 202), or
b) said stator (104; 204) has 10 inner poles (110; 210) that are distributed around said central rotational axis (106; 206) to cover 90° of the rotor (102; 202),
attaching windings to inner said poles (110; 210), so that said inner poles (110; 210) each carry a primary winding and a sine and/or a cosine secondary winding, wherein an excitation winding and at least one output winding are mounted on the inner poles (110; 210), wherein the number and/or the direction of the windings differ from pole to pole, and wherein additional first and second peripheral poles (114; 214) are provided which carry only a primary winding;
assembling the rotor (102; 202) with the stator (104; 204, 205) in a way that the rotor (102; 202) is operable to rotate around the central rotational axis (106; 206) with respect to the stator (104; 204, 205).

8. Method according to claim 7, wherein the step of attaching windings to the inner poles (110; 210) comprises providing an electrically insulating coil body for each pole with at least one winding, and mounting the coil bodies on the poles.

9. Method according to claim 7 or 8, wherein the number of turns of the windings on the first and second peripheral pole differs from the number of turns of the windings on the inner poles.

## Patentansprüche

1. Variabler Reluktanz-Winkelsensor, umfassend:
mindestens einen Stator (104; 204) mit einem zumindest teilweise ferromagnetischen Kern, der ein Joch (116; 216) und eine Mehrzahl von Innenpolen (110; 210) aufweist, die sich von dem Joch (116; 216) radial nach innen in Richtung auf eine zentrale Drehachse (106; 206) des Winkelsensors oder von dieser nach außen erstrecken, wobei eine Erregerwicklung und mindestens eine Ausgangswicklung an den Innenpolen (110; 210) angebracht sind,
einen Rotor (102; 202), der so betreibbar ist, dass er sich in Bezug auf den Stator (104; 204) um die zentrale Drehachse (106; 206) dreht, und der eine solche Form hat, dass sich eine Spaltpermeanz in Bezug auf einen Drehwinkel um die zentrale Drehachse (106; 206) sinusförmig ändert,
wobei das Joch (116; 216) so geformt ist, dass es sich entlang eines Kreisbogens um die zentrale Drehachse (106; 206) erstreckt, um einen Jochwinkel (124) von weniger als 360° abzudecken,
wobei die Anzahl und/oder die Richtung der Windungen von Pol zu Pol unterschiedlich ist, und
wobei zusätzliche erste und zweite periphere Pole (114; 214) vorgesehen sind, die nur eine Primärwicklung tragen,
**dadurch gekennzeichnet, dass**
a) der Stator (104; 204) fünf Innenpole (110; 210) aufweist, die um die zentrale Drehachse (106; 206) herum verteilt sind, um 45° des Rotors (102; 202) mit 12 Keulen abzudecken, wobei die Innenpole (110; 210) jeweils eine Primärwicklung und eine Sinus- und/oder eine Cosinus-Sekundärwicklung tragen, oder
b) der Stator (104; 204) 10 Innenpole (110; 210) aufweist, die um die zentrale Drehachse (106; 206) verteilt sind, um 90° des Rotors (102; 202) mit 12 Keulen abzudecken, wobei die Innenpole (110; 210) jeweils eine Primärwicklung und eine Sinus- und/oder eine Cosinus-Sekundärwicklung tragen.

2. Winkelsensor nach Anspruch 1, wobei die Anzahl der Windungen um die Außenpole (114; 214) des Stators (104; 204) geringer ist als die Anzahl der Windungen um die Innenpole.

3. Winkelsensor nach einem der vorhergehenden Ansprüche, mit einem ersten und einem zweiten Stator (204, 205), die jeweils einen Jochwinkel von weniger als 180° einschließen, wobei der erste Stator (204) symmetrisch zu dem zweiten Stator (205) in Bezug auf die zentrale Drehachse (206) angeordnet ist.

4. Winkelsensor nach Anspruch 3, wobei die Wicklungen auf dem zweiten Stator (205) punktsymmetrisch zur Verteilung der Wicklungen auf dem ersten Stator (204) auf die Pole verteilt sind, wobei der Ursprung der Punktsymmetrie der Punkt ist, an dem die Drehachse (206) die durch den Rotor (202) definierte Ebene schneidet.

5. Winkelsensor nach Anspruch 3, wobei die Wicklungen auf dem zweiten Stator (205) punktsymmetrisch zur Verteilung der Wicklungen auf dem ersten Stator (204) auf die Pole verteilt sind, jedoch mit umgekehrter Wicklungsrichtung, wobei der Ursprung der Punktsymmetrie der Punkt ist, an dem die Drehachse (206) die durch den Rotor (202) definierte Ebene schneidet.

6. Winkelsensor nach einem der vorhergehenden Ansprüche, wobei der Stator (104; 204, 205) aus gestanzten und geschichteten ferromagnetischen Lamellen hergestellt ist.

7. Verfahren zur Herstellung eines Winkelsensors des Typs mit variabler Reluktanz, wobei das Verfahren die folgenden Schritte umfasst:
Herstellen eines Rotors (102; 202), der sich um eine zentrale Drehachse (106; 206) des Winkelsensors (110; 200) drehen kann, wobei der Rotor (102; 202) 12 Keulen mit einer solchen Form aufweist, dass sich eine Spaltpermeanz in Bezug auf einen Drehwinkel um die zentrale Drehachse (106; 206) sinusförmig ändert;
Herstellen mindestens eines Stators (104; 204, 205) mit einem zumindest teilweise ferromagnetischen Kern, der ein Joch (116; 216) und eine Vielzahl von Innenpolen (110; 210) aufweist, die sich von dem Joch (116; 216) radial nach innen in Richtung auf die zentrale Drehachse (106; 206) oder von dieser nach außen erstrecken, wobei das Joch (116; 216) so geformt ist, dass es sich entlang eines Kreisbogens um die zentrale Drehachse erstreckt, um einen Jochwinkel (124) von weniger als 360° abzudecken, und wobei
a) der Stator (104; 204) fünf Innenpole (110; 210) aufweist, die um die zentrale Drehachse (106; 206) verteilt sind, um 45° des Rotors (102; 202) abzudecken, oder
b) der Stator (104; 204) 10 Innenpole (110; 210) hat, die um die zentrale Drehachse (106; 206) verteilt sind, um 90° des Rotors (102; 202) abzudecken,
Anbringen von Wicklungen an den inneren Polen (110; 210), so dass die inneren Pole (110; 210) jeweils eine Primärwicklung und eine Sinus- und/oder eine Cosinus-Sekundärwicklung tragen, wobei eine Erregerwicklung und mindestens eine Ausgangswicklung an den inneren Polen (110; 210) angebracht sind, wobei die Anzahl und/oder die Richtung der Wicklungen von Pol zu Pol unterschiedlich ist, und wobei zusätzliche erste und zweite Umfangspole (114; 214) vorgesehen sind, die nur eine Primärwicklung tragen;
Zusammenbauen des Rotors (102; 202) mit dem Stator (104; 204, 205) in einer Weise, dass der Rotor (102; 202) betreibbar ist, um sich um die zentrale Drehachse (106; 206) in Bezug auf den Stator (104; 204, 205) zu drehen.

8. Verfahren nach Anspruch 7, wobei der Schritt des Anbringens von Wicklungen an den Innenpolen (110; 210) das Bereitstellen eines elektrisch isolierenden Spulenkörpers für jeden Pol mit mindestens einer Wicklung und das Anbringen der Spulenkörper an den Polen umfasst.

9. Verfahren nach Anspruch 7 oder 8, wobei sich die Anzahl der Windungen der Wicklungen am ersten und zweiten Umfangspol von der Anzahl der Windungen der Wicklungen an den Innenpolen unterscheidet.

## Revendications

1. Capteur d'angle à réluctance variable comprenant :
au moins un stator (104 ; 204) avec un noyau au moins partiellement ferromagnétique ayant un étrier (116 ; 216) et une pluralité de pôles intérieurs (110 ; 210) qui s'étendent de l'étrier (116 ; 216) radialement vers l'intérieur ou vers l'extérieur d'un axe de rotation central (106 ; 206) du capteur d'angle, dans lequel un enroulement d'excitation et au moins un enroulement de sortie sont montés sur les pôles intérieurs (110 ; 210),
un rotor (102 ; 202) qui peut tourner autour de l'axe de rotation central (106 ; 206) par rapport au stator (104 ; 204) et dont la forme est telle que la perméance de l'entrefer varie de manière sinusoïdale en fonction de l'angle de rotation autour de l'axe de rotation central (106 ; 206),
dans lequel l'étrier (116 ; 216) est conçu pour s'étendre le long d'un arc de cercle autour de l'axe de rotation central (106 ; 206) pour couvrir un angle d'étrier (124) de moins de 360°,
dans lequel le nombre et/ou la direction des enroulements diffèrent d'un pôle à l'autre, et
dans lequel des premiers et deuxièmes pôles périphériques (114 ; 214) supplémentaires sont prévus pour ne porter qu'un enroulement primaire,
**caractérisé en ce que**
a) ledit stator (104 ; 204) a cinq pôles intérieurs (110 ; 210) qui sont répartis autour dudit axe de rotation central (106 ; 206) pour couvrir 45° du rotor (102 ; 202) ayant 12 lobes, dans lequel lesdits pôles intérieurs (110 ; 210) portent chacun un enroulement primaire et un enroulement secondaire sinusoïdal et/ou cosinusoïdal, ou
b) ledit stator (104 ; 204) possède 10 pôles intérieurs (110 ; 210) qui sont répartis autour dudit axe de rotation central (106 ; 206) pour couvrir 90° du rotor (102 ; 202) ayant 12 lobes, dans lequel lesdits pôles intérieurs (110 ; 210) portent chacun un enroulement primaire et un enroulement secondaire sinusoïdal et/ou cosinusoïdal.

2. Capteur d'angle selon la revendication 1, dans lequel le nombre de tours d'enroulement autour des pôles périphériques (114 ; 214) du stator (104 ; 204) est inférieur au nombre de tours d'enroulement autour des pôles intérieurs.

3. Capteur d'angle selon l'une des revendications précédentes, comprenant un premier et un deuxième stator (204, 205) qui couvrent chacun un angle d'étrier inférieur à 180°, dans lequel ledit premier stator (204) est disposé symétriquement audit deuxième stator (205) par rapport audit axe de rotation central (206).

4. Capteur d'angle selon la revendication 3, dans lequel les enroulements du deuxième stator (205) sont répartis sur les pôles avec une symétrie ponctuelle par rapport à la répartition des enroulements du premier stator (204), dans lequel l'origine de la symétrie ponctuelle est le point d'intersection de l'axe de rotation (206) avec le plan défini par le rotor (202).

5. Capteur d'angle selon la revendication 3, dans lequel les enroulements sur le deuxième stator (205) sont répartis sur les pôles avec une symétrie ponctuelle par rapport à la répartition des enroulements sur le premier stator (204), mais avec un sens d'enroulement inversé, dans lequel l'origine de la symétrie ponctuelle est le point où l'axe de rotation (206) coupe le plan défini par le rotor (202).

6. Capteur d'angle selon l'une des revendications précédentes, dans lequel ledit stator (104 ; 204, 205) est fabriqué à partir de lamelles ferromagnétiques estampées et stratifiées.

7. Procédé de fabrication d'un capteur d'angle à réluctance variable, le procédé comprenant les étapes suivantes consistant à :
fabriquer un rotor (102 ; 202) capable de tourner autour d'un axe de rotation central (106 ; 206) du capteur d'angle (110 ; 200), le rotor (102 ; 202) ayant 12 lobes d'une forme telle que la perméance de l'entrefer varie de manière sinusoïdale par rapport à un angle de rotation autour de l'axe de rotation central (106 ; 206) ;
fabriquer au moins un stator (104 ; 204, 205) avec un noyau au moins partiellement ferromagnétique ayant une étrier (116 ; 216) et une pluralité de pôles intérieurs (110 ; 210) qui s'étendent de l'étrier (116 ; 216) radialement vers l'intérieur en direction ou à l'extérieur de l'axe de rotation central (106 ; 206), dans lequel l'étrier (116 ; 216) est conçu pour s'étendre le long d'un arc de cercle autour dudit axe de rotation central pour couvrir un angle d'étrier (124) de moins de 360°, et dans lequel
a) ledit stator (104 ; 204) a cinq pôles intérieurs (110 ; 210) qui sont répartis autour dudit axe de rotation central (106 ; 206) pour couvrir 45° du rotor (102 ; 202), ou
b) ledit stator (104 ; 204) possède 10 pôles intérieurs (110 ; 210) qui sont répartis autour dudit axe de rotation central (106 ; 206) pour couvrir 90° du rotor (102 ; 202),
fixer des enroulements sur lesdits pôles intérieurs (110 ; 210), de sorte que lesdits pôles intérieurs (110 ; 210) portent chacun un enroulement primaire et un enroulement secondaire sinus et/ou cosinus, dans lequel un enroulement d'excitation et au moins un enroulement de sortie sont montés sur les pôles intérieurs (110 ; 210), dans lequel le nombre et/ou la direction des enroulements différent d'un pôle à l'autre, et dans lequel des premiers et deuxièmes pôles périphériques (114 ; 214) supplémentaires sont prévus pour ne porter qu'un enroulement primaire ;
assembler le rotor (102 ; 202) avec le stator (104 ; 204, 205) de manière à ce que le rotor (102 ; 202) puisse tourner autour de l'axe de rotation central (106 ; 206) par rapport au stator (104 ; 204, 205).

8. Procédé selon la revendication 7, dans lequel l'étape consistant à fixer les enroulements aux pôles intérieurs (110 ; 210) comprend le fait de fournir un corps de bobine électriquement isolant pour chaque pôle avec au moins un enroulement, et à monter les corps de bobine sur les pôles.

9. Procédé selon la revendication 7 ou 8, dans lequel le nombre de tours des enroulements sur le premier et le deuxième pôle périphérique diffère du nombre de tours des enroulements sur les pôles intérieurs.
